Europäisches Patentamt

European Patent Office

Office européen des brevets

(19)

(11) Publication number: **0 261 286 B1**

(12) . **EUROPEAN PATENT SPECIFICATION**

(45) Date of publication of patent specification: 28.08.91    (51) Int. Cl.⁵: **G01T 1/26,** G01T 1/02, G01T 1/04

(21) Application number: **86307329.2**

(22) Date of filing: **24.09.86**

(54) **Radiation detecting elements and method of detection.**

(43) Date of publication of application:
**30.03.88 Bulletin 88/13**

(45) Publication of the grant of the patent:
**28.08.91 Bulletin 91/35**

(84) Designated Contracting States:
**DE FR GB**

(56) References cited:
**US-A- 3 102 197**

**NUCLEAR INSTRUMENTS & METHODS IN PHYSICS RESEARCH, section A, vol. A236, no. 1, May 1985, pages 123-127, Elsevier Science Publishers B.V., Amsterdam, NL; S. TANAKA: "The solid state proportional counter of an organic insulator"**

**IEEE TRANSACTIONS ON NUCLEAR SCIENCE, ANNUAL CONFERENCE ON NUCLEAR AND SPACE RADIATION EFFECTS, Seattle, Washington, 24th-27th July 1972, pages 15-22, US; R.C. WEINGART et al.: "X-ray-induced photoconductivity in dielectric films"**

(73) Proprietor: **YOSHINO, KATSUMI**
**166-3, Obu-cho**
**Kishiwada-shi Osaka-fu(JP)**

Proprietor: **MITSUI TOATSU CHEMICALS, Inc.**
**2-5 Kasumigaseki 3-chome**
**Chiyoda-Ku Tokyo 100(JP)**

Proprietor: **SUMITOMO ELECTRIC INDUSTRIES LIMITED**
**No. 15, Kitahama 5-chome, Higashi-ku Osaka-shi, Osaka 541(JP)**

(72) Inventor: **Yoshino, Katsumi**
**166-3, Obu-cho Kishiwada-shi**
**Osaka-fu(JP)**
Inventor: **Sugimoto, Ryuichi**
**3-1-5-202, Yayoi-cho Izumi-shi**
**Osaka-fu(JP)**
Inventor: **Okube, Jiro**
**950, Noda Kumatori-cho**
**Sennan-gun Osaka-fu(JP)**

(74) Representative: **Hayward, Denis Edward Peter et al**
**Lloyd Wise, Tregear & Co. Norman House**
**105-109 Strand**
**London WC2R 0AE(GB)**

## Description

The present invention relates to solid materials and a method of detecting radiation. More particularly, it relates to radiation detecting solid materials consisting of conductive polymers and radiation sensitive materials, and the method for detection by use of the same.

Electron beams, gamma-, alpha-, beta- and X-rays and neutron beams have already been utilized for many purposes in various ways. To carry out such radiation exposure satisfactorily, it is essential to measure precisely the radiation dose.

On the other hand, for the safety of operators who are engaged in such radiation application industries and medical services, it is also very important to detect and measure radiation quantity at any time. Under these conditions, many kinds of detecting instruments are commercially available for the rapid and sensitive determination of various radiation doses.

For example, in various applications, including electron beam processing, cellulose triacetate films are often used as detecting and measuring materials for radiation which are simple and easy to handle. Because the UV-absorption spectra of the films vary with radiation exposure, the quantity of radiation exposure can be detected and measured by reading the variation of the absorption coefficient of a characteristic wave length.

In addition, the thermal stimulation current measuring method is often used. When the solid is irradiated, electric charge is generated proportional to the radiation dose and stored in a trap constituted by the solid. The electric charge is emitted with temperature rise, accompanied by the build-up of a current. The thermal stimulation current measuring method uses this effect. After irradiation, the sample is connected to an external circuit and the temperature is raised at a constant rate. The quantity of electric charge in the sample is evaluated by the amount of current produced in the circuit. The radiation dose is determined from the amount of current produced.

Yoshino et al. have also proposed simpler materials and a method for detecting radiation. This method utilizes the fact that the conductivity and the absorption spectra of the conductive polymers vary remarkably with radiation exposure in gas including sulfur hexafluoride. [KOBUNSHI RONBUNSHYU 41, No.4, 177-182 (April 1984)]

However, the method with cellulose triacetate, for example, requires a UV light source and cannot identify the presence of irradiation by visual inspection and the detection range is 10 Mrad (= $10^4$ Gy) or less.

In addition the thermal stimulation current measuring method requires micro-ammeters in order to measure charge emission and results in a large instrument and a long time for measurement. Both methods cannot be used during irradiation and they both require an interruption in the irradiation in order to take out the materials or the sample to be measured.

Regarding this point, the method proposed by Yoshino et al. which uses a combination of the conductive polymers and gas including sulfur hexafluoride, has the advantages of a simple procedure and a broad range of measurement. However, the method has drawbacks, such as complexity and the restrictions for handling the gas, which is a problem for actual use.

As described above, the conventional methods and materials for detecting radiation generally have many problems such as high price, difficulty in handling, complicated operation, large size and restricted range of measuring. The present invention was developed in order to solve these problems. The object of this invention is to provide a novel detecting method and materials which are easy to handle, capable of continuously measuring the radiation dose during irradiation, and satisfactory in price.

According to the present invention, there is provided a solid material for detecting electron beam radiation, gamma-, alpha-, beta-, and X-rays, and neutron beam radiation, which comprises an electrically conductive polymer and a radiation sensitive material such as a metal halide, or diaryliodonium, triarylsulfonium and aryldiazonium salts having anions including the halide ions, perchlorate ion, hexafluoroarsenate (V) ion, and hexafluoroantimonate (V) ion, wherein said radiation produces a substance capable of acting as a dopant for said conductive polymer.

Another aspect of the invention is the method for detecting radiation which comprises detecting variation in the electrical conductivity of the above radiation detecting solid material.

A further aspect of the invention is the method for detecting radiation which comprises detecting variation of the absorption spectrum of the above radiation detecting solid material.

Still a further aspect of the invention is a radiation detector which comprises the above radiation detecting solid material and at least a pair of electrodes therefor.

The conductive polymers for this invention are not restricted in particular and may be any polymer whose electrical conductivity and/or absorption spectrum varies due to the dopant described below. The polymers include, for example, polyacetylene, polythiophene, polypyrrole, polyfuran, polyselenophene, poly-para-phenylene, poly-para-phenylenesulfide, polyaniline, poly-para-phenylenevinylene, poly-para-phenyleneoxide and polyheptadiyne.

The radiation sensitive materials for this invention may be materials which decompose and/or dissociate by exposure to radiation including electron beams, gamma-, alpha-, beta-, and x-rays and neutron beams, and generate the substance capable of acting as the dopant for the above described conductive polymers.

The radiation sensitive materials include, for example, metal halides such as silver chloride, silver bromide, ferric fluoride, cupric fluoride, lead (II) iodide, bismuth (III) iodide, cuprous iodide, silver iodide, cadmium iodide; and diaryliodonium, triarylsulfonium and aryldiazonium salts having anions such as fluoride ion, chloride ion, bromide ion, iodide ion, perchlorate ion, tetrafluoroborate ion, hexafluorophosphate (V) ion, hexafluoroarsenate (V) ion, and hexafluoroantimonate (V) ion.

A solid radiation-detecting material of this invention may be solid matter consisting of the conductive polymer and the radiation sensitive material. The solid matter can be prepared by the following processes. In the first process, the radiation sensitive material is introduced into or combined with the conductive polymer. In the second process, a layer of the solid conductive polymer is deposited on to a layer of the radiation sensitive material or a layer containing the same.

The actual procedures of these processes include, immersion of the conductive polymer into a solution containing the radiation sensitive material, compounding of the radiation sensitive material during the molding step of the conductive polymer, copolymerization of the conductive polymer with a complementary radiation sensitive material, and preparation of a laminated structure by alternately piling up conductive polymer films having the proper thickness and other films obtained by the impregnation of, for example, a polymer matrix with the radiation sensitive material.

The technique according to the invention will now be described in more detail, by way of illustration, with reference to the accompanying drawings, and the following examples.

Figures 1 and 2 illustrate examples of the physical arrangement of materials according to the invention.

Figure 3 illustrates an embodiment of the invention having a support layer.

Figures 4 to 9 show examples of the manner of use of materials according to this invention involving measurement of variation in electrical conductivity.

Figures 10 and 11 illustrate examples of use involving the detection of variation in light absorption.

Figure 12 shows the relationship between the radiation dose and the electrical conductivity measured in the case of a typical example of a structure according to the invention (see Example 4).

Figure 13 shows the absorption spectra before and after irradiation of a material according to the invention (see Example 5).

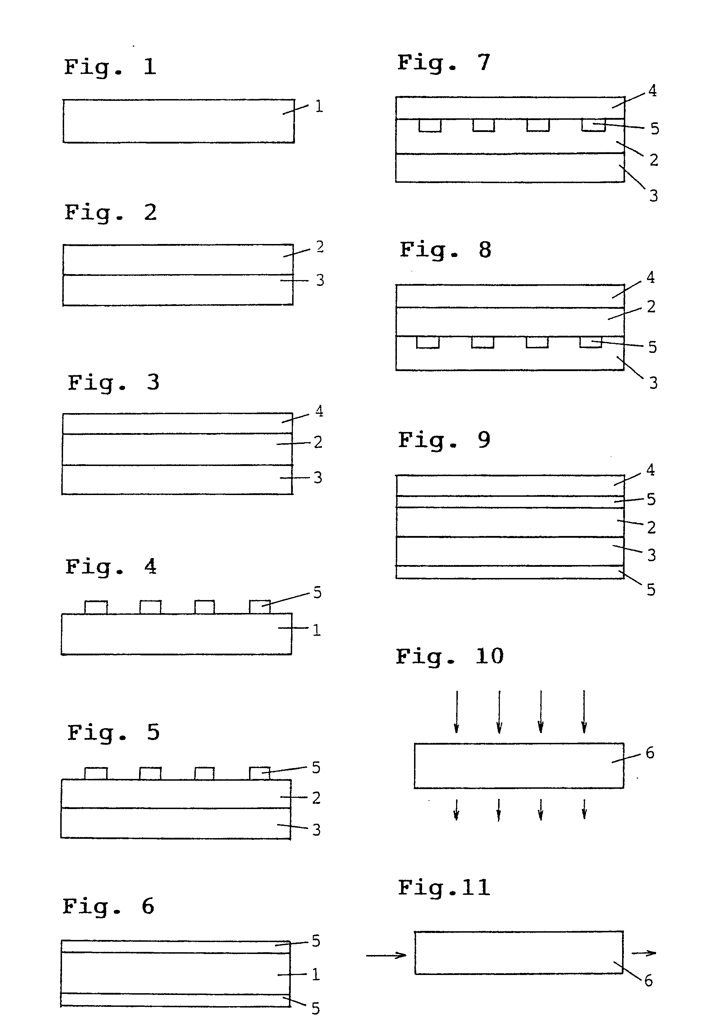

Figure 1 illustrates a side view of a monolayer sheet. Figure 2 shows a side view of a typical double layer laminated sheet. Figure 3 illustrates a side view of a typical laminated sheet having a support. In these Figures, 1 indicates a monolayer sheet embodying both a conductive polymer and a radiation sensitive material, 2 a conductive polymer film layer, 3 a film layer containing a radiation sensitive material, and 4 a support substrate such as polyethylene terephthalate.

Irradiation of the detecting materials thus obtained causes a variation in the electrical conductivity, the light absorption spectrum and the magnetic properties. The detection of variation in the electrical conductivity and/or the light absorption spectrum in particular can be conducted with a simple instrument having a high sensitivity.

The detection of irradiation by electrical conductivity can be performed with a flat or a tubular structure formed of the detecting material with electrodes applied thereto. Figures 4, 5 and 6 are side views of structural examples where electrodes 5 are attached to materials according to the invention in various ways for detecting radiation by electrical conductivity. Figures 7, 8 and 9 illustrate side views of further structural examples wherein both electrodes 5 and a support layer 4 are attached to the materials according to the invention.

In addition, the detection of variation in the light absorption spectrum can be conducted by shining light in a perpendicular or parallel direction on to a sheet of the detecting material and measuring the absorption spectrum. Figures 10 and 11 show side views of such sheets and the direction of the light. In these Figures, 6 indicates the detecting material according to the invention and the arrows represent the direction of the transmitted light.

The detection of irradiation can thus be performed very conveniently by measuring either the electrical conductivity or light absorption characteristics of the materials of this invention.

In particular, the electrical conductivity determination can be carried out very easily because the variation in the conductivity is $10^{-10}$ to $10^2$ S/cm. Materials responsive to irradiation having such an easily measurable range have not previously been found. The materials of this invention also make possible measurement while under irradiation.

The method for measuring variation in light absorption characteristics can, of course, precisely determine the radiation dose by accurately measuring transmittance. The materials of this invention comprising conductive polymers also show a distinct colour change in the visible region and thus have the advantage that visual observation can be very easily performed of the presence or absence of irradiation, approximate radiation dose etc.

## SPECIFIC EXAMPLES

The invention will be illustrated further with respect to the following Specific Examples.

### Example 1

An electrochemically polymerized polythiophene film having a thickness of 12 $\mu$m was dipped into a dichloromethane solution of diphenyliodonium hexafluoroarsenate(V), and dried. The quantity of diphenyliodonium hexafluoroarsenate(V) absorbed on the film was 1.16% by mol per one mol of thiophene unit in the polythiophene.

Samples were prepared from the film by cutting out small pieces having dimensions of 1mm x 10mm.

The electrical conductivity of the samples thus obtained was 5 x $10^{-10}$ S/cm at room temperature, increasing to 4.5 x $10^{-8}$ S/cm after irradiating with 12 Mrad (= 12 x $10^4$y) of a 1.8 MeV electron beam, and further increased to 2 x $10^{-4}$ S/cm by irradiating with 30 Mrad (= 3 x $10^5$ Gy).

This result indicates that radiation dose can be estimated by measuring the electrical conductivity.

### Example 2

The procedure of Example 1 was repeated to prepare the samples except that a polythiophene film having a thickness of 8 $\mu$m was used which was chemically synthesized by using iron(III) chloride as an oxidizing agent.

The conductivity of the samples thus obtained was 1 x $10^{-8}$ S/cm at room temperature, increasing to 5 x $10^{-7}$ S/cm after irradiating with 12 Mrad of a 1.8 MeV electron beam, and further increased to 2 x $10^{-5}$ S/cm by irradiating with 30 Mrad.

### Example 3

In a glass mortar, 3 grams of polythiophene powder (obtained by chemically polymerizing thiophene using iron (III) chloride as an oxidizing agent) was mixed with 1.1 grams of triphenylsulfonium hexafluoroarsenate(V) and 1 ml of dichloromethane, and dried.

A cylindrical mold having an internal diameter of 10 mm was charged with 50 mg of the dried material and pressed for 10 minutes under a pressure of 600 kg/cm² to give circular sheet samples having a 10 mm diameter and 0.3 mm thickness.

The conductivity of the sheet samples was 3 x $10^{-12}$ S/cm at room temperature, increasing to 8 x $10^{-8}$ S/cm after irradiating with 90 Mrad ( = 9 x $10^5$ Gy) of a 1.8 MeV electron beam.

### Example 4

Luminescent diodes, which are used for various measuring instruments in irradiation chambers, deteriorate under radiation doses above the permissible limit and cause error in the measured values. To prevent such errors, it is required to know the absorption dose of the luminescent diodes. For this purpose, a radiation detecting structure was prepared by the following process.

An electrochemically polymerized polythiophene film having dimensions of 15mm x 25mm x 35 $\mu$m was coated with a suspension of 150 mg of diphenyliodonium chloride in 10% aqueous polyvinyl alcohol solution to give a film having a thickness of 200 $\mu$m.

Radiation dose detecting samples were obtained by cutting out small pieces of 2mm x 10mm dimensions from the resultant film.

The samples were each provided with a pair of platinum electrodes, 5 mm apart, and sealed with polypropylene, except for the ends of the electrodes, which were connected to 50 m of 1.5 mm square double lead wires.

The resultant radiation detecting structure was placed on a measuring instrument in the irradiation chamber and the lead wires were extended to a remote position outside the chamber where an ohmmeter was installed and the electrical conductivity of the sample was measured.

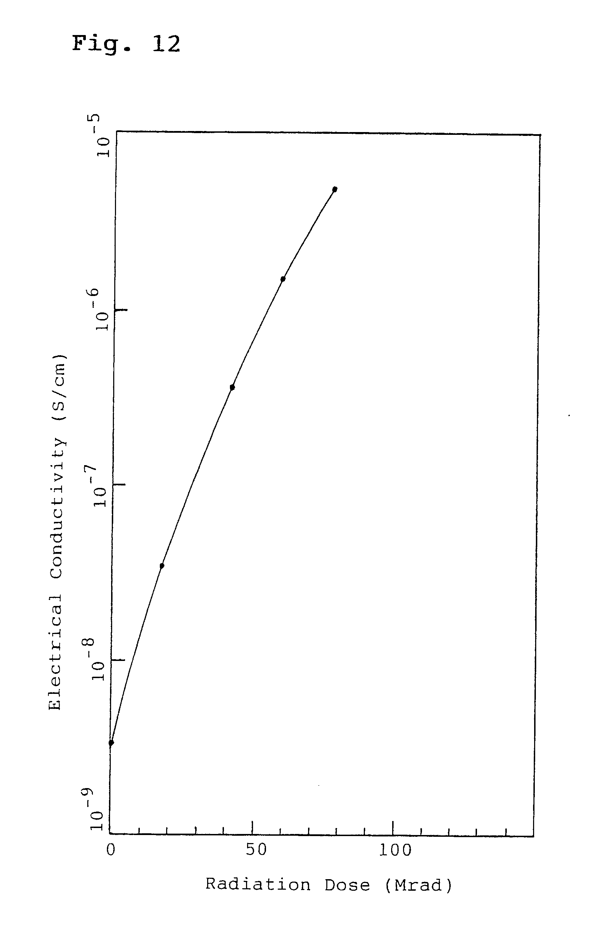

The electrical conductivity of the samples was 3.4 x $10^{-8}$ S/cm at room temperature. Figure 12 illustrates the relationship between radiation dose and electrical conductivity under irradiation with a 1.8 MeV electron beam. As clearly shown in the Figure, the samples obtained can continuously measure, from outside the chamber, the exposure dose of the instrument in the irradiation chamber.

### Example 5

A polythiophene film having a thickness of 2 $\mu$m was electrochemically prepared on a polyethylene terephthalate film which was previously coated with a conductive indium oxide tin membrane. A solution of 50 mg of diphenyliodonium hexafluoroarsenate(V) and 500 mg of polystyrene in 30 ml of dichloromethane was cast on the polythiophene film and dried to form another film having a thickness of 7 $\mu$m.

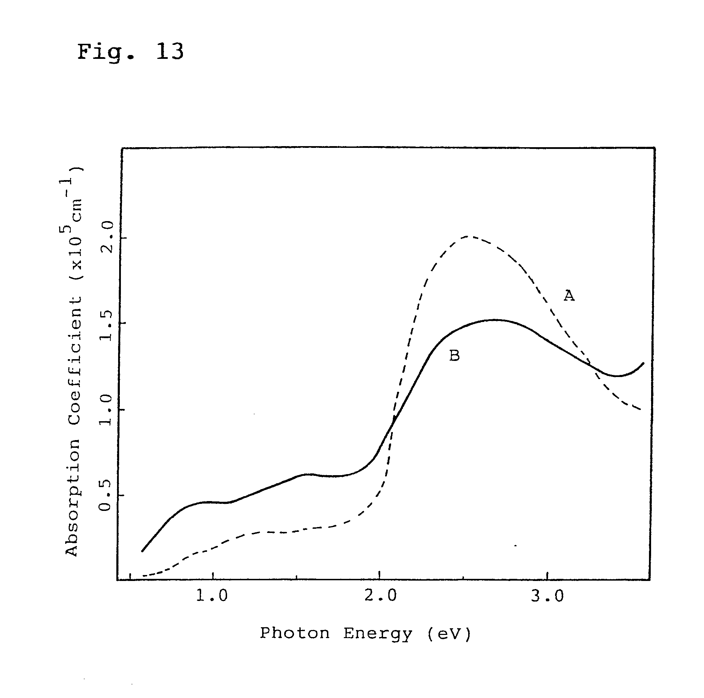

The samples thus obtained were irradiated with 48 Mrad of a 1.8 MeV electron beam. Figure 13 illustrates the absorption spectra of the samples before and after irradiation. In Figure 13, A is the absorption spectrum before irradiation and B in the spectrum after irradiation. The colour turned from red to blue upon visual inspection. As a result, the radiation dose can be detected by observing the variation in absorption characteristics.

**Claims**

1. A solid material for detecting electron beam radiation, gamma-, alpha-, beta-, and X-rays, and neutron beam radiation, which comprises an electrically conductive polymer and a radiation sensitive material such as a metal halide, or diaryliodonium, triarylsulfonium and aryldiazonium salts having anions including the halide ions, perchlorate ion, hexafluoroarsenate (V) ion, and hexafluoroantimonate (V) ion, wherein said radiation produces a substance capable of acting as a dopant for said conductive polymer.

2. A material according to Claim 1, wherein said conductive polymer is a compound selected from the group consisting of polyacetylene, polythiophene, polypyrrole, polyfuran, polyselenophene, poly-para-phenylene, poly-para-phenylenesulfide, polyaniline, poly-para-phenylenevinylene, poly-para-phenyleneoxide, and polyheptadiyne.

3. A material according to Claim 1 or Claim 2, wherein said radiation sensitive material is a compound selected from the group consisting of a metal halide including silver chloride, silver bromide, ferric fluoride, cupric fluoride, lead (II) iodide, bismuth (III) iodide, cuprous iodide, silver iodide and cadmium iodide, or diaryliodonium, triarylsulfonium and aryldiazonium salts having anions including the fluoride ion, chloride ion, bromide ion, iodide ion, perchlorate ion, hexafluoroarsenate (V) ion, and hexafluoroantimonate (V) ion.

4. A material according to Claim 3, wherein said radiation sensitive material is diphenyliodonium chloride, diphenyliodonium hexafluoroarsenate (V) or triphenylsulfonium hexafluoroarsenate (V).

5. A material according to Claim 4, wherein said conductive polymer is polythiophene and said radiation sensitive material is diphenyliodonium hexafluoroarsenate (V) or triphenylsulfonium hexafluoroarsenate (V).

6. A material according to any preceding claim, in the form of a monolayer sheet of said conductive polymer incorporating said radiation sensitive material.

7. A material according to any of preceding Claims 1 to 5, in the form of a laminated sheet including at least one layer of said conductive polymer and at least one layer containing said radiation sensitive material, said layers being mutually contiguous.

8. A material according to any preceding claim, including a support substrate upon which said radiation detecting solid material is carried.

9. A method for detecting radiation, which comprises detecting variation in the electrical conductivity of a radiation detecting solid material according to any of Claims 1 to 8.

10. A method for detecting radiation, which comprises detecting variation in the absorption spectrum of a radiation detecting solid material according to any of Claims 1 to 8.

11. A radiation detector which comprises a radiation detecting solid material according to any of Claims 1 to 8, with at least a pair of electrodes applied thereto.

12. A radiation detector which comprises a radiation detecting solid material according to Claim 6, provided with at least a pair of electrodes in contact with one side of said monolayer sheet.

13. A radiation detector which comprises a radiation detecting solid material according to Claim 6, provided with electrodes in contact with both sides of said monolayer sheet.

14. A radiation detector which comprises a radiation detecting solid material according to Claim 7, provided with at least a pair of electrodes in contact externally or internally with said conductive polymer layer.

15. A radiation detector which comprises a radiation detecting solid material according to Claim 7, provided with electrodes in contact with both sides of said laminated sheet.

**Revendications**

1. Matériau solide pour détecter des radiations de faisceau d'électrons, de rayonnement gamma, alpha, béta et X, et de faisceau de neutrons, qui comporte un polymère conducteur de l'électricité et un matériau sensible aux radiations, tel qu'un halogénure métallique, ou des sels de diaryliodonium, de triarylsulfonium et d'aryldiazonium possédant des anions comprenant les ions halogénures, l'ion perchlorate, l'ion hexafluoroarséniate (V), l'ion hexafluoroantimoniate (V), dans lesquels ladite radiation produit une substance capable d'agir comme un dopant pour le polymère conducteur.

2. Matériau selon la revendication 1, dans lequel le polymère conducteur est un composé choisi dans le groupe formé par le polyacétylène, le polythiophène, le polypyrrole, le polyfurane, le polysélénophène, le poly-para-phénylène, le sulfure de poly-para-phénylène, la polyaniline, le poly-para-phénylènevinylène, le poly-para-phénylèneoxyde, et le polyheptadiyne.

3. Matériau selon la revendication 1 ou la revendication 2, dans lequel le matériau sensible aux radiations est un composé choisi dans le groupe formé par un halogénure métallique comprenant le chlorure d'argent, le bromure d'argent, le fluorure ferrique, le fluorure cuivrique, l'iodure de plomb (II), l'iodure de bismuth (III) l'iodure cuivreux, l'iodure d'argent, et l'iodure de cadmium, ou des sels de diaryliodonium, de triarylsulfonium et d'aryldiazonium, comprenant des anions comportant l'ion fluorure, l'ion chlorure, l'ion bromure, l'ion iodure, l'ion perchlorate, l'ion hexafluoroarséniate (V), et l'ion hexafluoroantimoniate (V).

4. Matériau selon la revendication 3, dans lequel le matériau sensible aux radiations est du chlorure de diphényliodonium, de l'hexafluoroarséniate (V) de diphényliodonium, ou de l'hexafluoroarséniate (V) de triphénylsulfonium.

5. Matériau selon la revendication 4, dans lequel le polymère conducteur est un polythiophène et le matériau sensible aux radiations est de l'hexafluoroarséniate (V) de diphényliodonium ou de l'hexafluoroarséniate (V) de triphénylsulfonium.

6. Matériau selon l'une quelconque des revendications précédentes, sous la forme d'une feuille monocouche dudit polymère conducteur comprenant le matériau sensible aux radiations.

7. Matériau selon l'une des revendications précédentes 1 à 5, sous la forme d'une feuille laminée, comprenant au moins une couche dudit polymère conducteur et au moins une couche comportant le matériau sensible aux radiations, ces couches étant mutuellement contiguës.

8. Matériau selon l'une quelconque des revendications précédentes, comprenant un substrat support sur lequel est apporté le matériau solide détectant les radiations.

9. Procédé de détection de radiations, qui comprend la détection de variations de la conductibilité électrique d'un matériau solide détectant les radiations, selon l'une quelconque des revendications 1 à 8.

10. Procédé de détection de radiations, qui comprend la détection de variations dans le spectre d'absorption d'un matériau solide détectant les radiations, selon l'une quelconque des revendications 1 à 8.

11. Détecteur de radiation qui comprend un matériau solide détectant les radiations selon l'une quelconque des revendications 1 à 8, avec au moins une paire d'électrodes qui y sont appliquées.

12. Détecteur de radiation qui comprend un matériau solide détectant les radiations selon la revendication 6, muni d'au moins une paire d'électrodes en contact avec une face de la feuille monocouche.

13. Détecteur de radiation qui comprend un matériau solide détectant les radiations selon la revendication 6, muni d'électrodes en contact avec les deux faces de ladite feuille monocouche.

14. Détecteur de radiation qui comprend un matériau solide détectant les radiations selon la revendication 7, muni d'au moins une paire d'électrodes en contact externe ou interne avec la couche de polymère conducteur.

15. Détecteur de radiation qui comprend un matériau solide détectant les radiations selon la revendication 7, muni d'électrodes en contact avec les deux faces de la feuille laminée.

## Patentansprüche

1. Feststoff zur Detektion der Strahlung von Elektronenstrahlen, von Gamma-, Alpha-, Beta- und Röntgenstrahlen sowie der Neutronenstrahlung, **gekennzeichnet** durch ein elektrisch leitendes Polymer und einen stahlungsempfindlichen Stoff wie ein Metallhalid oder Diaryliodonium-, Triarylsulfonium- und Aryldiazoniumsalzen, die Anionen aufweisen, zu denen die Halidionen, das Perchloration, Hexafluoroarsenat(V)ion und Hexafluoroantimonat(V)ion zu rechnen sind, wobei die Strahlung einen Stoff erzeugt, der als Dotierstoff für das leitende Polymer wirksam wird.

2. Feststoff nach Anspruch 1, dadurch **gekennzeichnet,** daß das leitende Polymer eine aus der Gruppe zu wählende Verbindung ist, zu der Polyazetylen, Polythiophen, Polyparaphenylensulfid, Polyanilin, Polyparaphenylenvinylen, Polyparaphenylenoxid und Polyheptadiyn (polyheptadiyne) zu rechnen sind.

3. Feststoff nach einem der vorhergehenden Ansprüche 1 oder 2, dadurch **gekennzeichnet,** daß der strahlungsempfindliche Stoff eine aus der Gruppe gewählte Verbindung ist, zu der Silberchlorid Silberbromid, Eisentrifluorid, Kupfer(II)-fluorid, Blei(II).-jodid, Wismut(III)-jodid, Kupfer(I)-jodid, Silberjodid und Kadmiumjodid oder Diaryliodonium-, Triarylsulfonium- und Aryldiazoniumsalze gehören, die Ionen aufweisen, zu denen das Fluorid-, Chlorid- , Bromid-, Jodid- , Perchlorat-, Hexafluoroarsenat(V)- und Hexafluoroantimonat(V)-ion zu rechnen sind.

4. Feststoff nach Anspruch 3, dadurch **gekennzeichnet,** daß als strahlungsempfindlicher Stoff Diphenyliodoniumchlorid, Diphenyliodoniumhexafluoroarsenat(V) oder Triphenylsulfoniumhexafluoroarsenat(V) verwendet wird.

5. Feststoff nach Anspruch 4, dadurch **gekennzeichnet,** daß als leitendes Polymer Polythiophen und als strahlungsempfindlicher Stoff Diphenyliodoniumhexafluoroarsenat(V) oder Triphenylsulfoniumhexafluoroarsenat(V) verwendet wird.

6. Feststoff nach einem der vorhergehenden Ansprüche 1 bis 5, dadurch **gekennzeichnet,** daß er in Form eines Monomolekularfilms des leitenden Polymers unter Einbau des strahlungsempflindlichen Stoffes vorliegt.

7. Feststoff nach einem der vorhergehenden Ansprüche 1 bis 5, dadurch **gekennzeichnet,** daß er in Form eines Schichtfilms des leitenden Polymers vorliegt und daß zumindest ein Schichtfilm den strahlungsempfindlichen Stoff enhält, wobei die Schichten gegenseitig aneinandergrenzen.

8. Feststoff nach einem der vorhergehenden Ansprüche 1 bis 7, dadurch **gekennzeichnet,** daß auch ein Trägersubstrat verwendet wird, von dem der strahlungsempfindliche Feststoff getragen wird.

9. Verfahren zur Strahlungsdetektion, **gekennzeichnet** durch die Detektion der Veränderung der elektrischen Leitfähigkeit eines strahlungsnachweisenden Feststoffes nach einem der vorhergehenden Ansprüche 1 bis 8.

10. Verfahren zur Strahlungsdetektion, **gekennzeichnet** durch die Detektion von Veränderungen des Absorptionsspektrum eines strahlungsnachweisenden Feststoffs nach einem der vorhergehenden Ansprüche 1 bis 8.

11. Strahlungsdetektor, **gekennzeichnet** durch einen strahlungsnachweisenden Feststoff nach einem der vorhergehenden Ansprüche 1 bis 8 mit zumindest einem an ihn angelegten Elektrodenpaar.

12. Strahlungsdetektor, dadurch **gekennzeichnet,** daß er einen strahlungsnachweisenden Feststoff nach Anspruch 6 aufweist und daß er zumindest mit einem mit einer Seite des Monomolekularfilm in Kontakt stehenden Elektrodenpaars versehen ist.

13. Strahlungsdetektor, dadurch **gekennzeichnet,** daß er einen strahlungsnachweisenden Feststoff nach Anspruch 6 aufweist und daß er mit Elektroden versehen ist, die mit beiden Seiten des Monomolekularfilms in Kontakt stehen.

14. Strahlungsdetektor, dadurch **gekennzeichnet,** daß er einen strahlungsnachweisenden Feststoff nach Anspruch 7 aufweist und daß er mit einem zumindest mit dem leitenden Polymerfilm äußerlich oder innerlich in Kontakt stehenden Elektrodenpaar versehen ist.

15. Strahlungsdetektor, dadurch **gekennzeichnet,** daß er einen strahlungsnachweisenden Feststoff nach Anspruch 7 aufweist und daß er mit Elektroden versehen ist, die mit beiden Seiten des geschichteten Films in Kontakt stehen.

Fig. 1

Fig. 7

Fig. 2

Fig. 8

Fig. 3

Fig. 9

Fig. 4

Fig. 5

Fig. 10

Fig. 6

Fig.11

# Fig. 12

Fig. 13